# EUROPÄISCHE PATENTSCHRIFT

(11) **EP 1 420 503 B1**
(45) Veröffentlichungstag und Bekanntmachung des Hinweises auf die Patenterteilung: **17.01.2007**
(21) Anmeldenummer: 02025777.0
(22) Anmeldetag: 16.11.2002
(51) Int. Cl.: H02K 5/22

(54) **Motorgehäuse**
Motor casing
Carcasse d'un moteur

(43) Veröffentlichungstag der Anmeldung: 19.05.2004
(73) Patentinhaber: MINEBEA Co., Ltd., Kitasaku-gun, Nagano-ken (JP)
(72) Erfinder: Willmer, Martin, 77948 Friesenheim (DE); Würfel, Peter, 78056 Villingen-Schwenningen (DE)
(74) Vertreter: Hoeger, Stellrecht & Partner Patentanwälte

(56) Entgegenhaltungen:
- DE-A- 4 304 385
- DE-A- 19 630 658
- US-A- 5 523 634
- US-A- 5 661 357

## Beschreibung

Die Erfindung betrifft einen Elektromotor mit einem Gehäuse, umfassend einen Gehäusemantel und endseitig desselben angeordnete Gehäusedeckel, mit einem im Gehäuse um eine Rotorachse drehbar gelagerten Rotor, mit einem in dem Gehäuse angeordneten Stator mit mindestens einer Motorwicklung, mit einer am Gehäuse angeordneten elektrischen Anschlusseinheit, und mit mindestens einer von der elektrischen Anschlusseinheit zur Motorwicklung in dem Gehäusemantel verlaufenden Zuleitung.

Derartige Elektromotoren sind aus der DE 196 30 658 A bekannt. Bei diesen besteht das Problem, eine Zuleitung in möglichst montagegünstiger Art und Weise zu der Motorwicklung zu führen.

Diese Aufgabe wird bei einem Elektromotor der eingangs beschriebenen Art erfindungsgemäß dadurch gelöst, dass der Gehäusemantel einen Mantelkörper und mindestens einen Steg aufweist, dass die mindestens eine Zuleitung im Bereich dieses Stegs im Gehäusemantel verläuft, und dass der mindestens eine Steg beiderseits der Zuleitung liegende Bereiche des Mantelkörpers miteinander verbindet und relativ zueinander stabilisiert.

Dadurch dass der Gehäusemantel einen Mantelkörper und mindestens einen Steg aufweist, dass die mindestens eine Zuleitung im Bereich dieses Stegs in dem Gehäusemantel verläuft, und dass der mindestens eine Steg beiderseits der Zuleitung liegende Bereiche des Mantelkörpers relativ zueinander stabilisiert, insbesondere verbindet, besteht die Möglichkeit, die in dem Steg vorhandene Materialanhäufung dazu zu nutzen, in dieser die mindestens eine Zuleitung ohne Stabilitätsverlust des Gehäusemantels verlaufen zu lassen, wobei die in dem Gehäusemantel verlaufende Zuleitung diesen an der Stelle ihres Verlaufs nicht schwächt.

Damit ist eine besonders einfache Lösung geschaffen, um zu vermeiden, dass die mindestens eine Zuleitung zur Motorwicklung durch ein Inneres des Gehäuses zu führen ist und zu deren sicherer Führung besondere Schutzmaßnahmen erforderlich sind.

Wenn die Zuleitung in dem Gehäusemantel verläuft, ist es besonders günstig, wenn der Gehäusemantel aus einem isolierenden Material hergestellt ist, da sich dann zusätzliche Isolationsmaßnahmen für die mindestens eine Zuleitung erübrigen.

Besonders günstig ist es, wenn der Gehäusemantel aus Kunststoff hergestellt ist.

Um den Gehäusemantel aus Kunststoff kostengünstig herstellen zu können, hat es sich als vorteilhaft erwiesen, wenn der Gehäusemantel ein Kunststoffspritzgussteil ist.

Zweckmäßigerweise ist dabei der Steg so ausgebildet, dass er sich ungefähr in Richtung parallel zur Rotorachse am Gehäusemantel erstreckt.

Vorteilhafterweise ist dabei der Steg so angeordnet, daß er auf einer Innenseite des Mantelkörpers liegt.

Hinsichtlich der Anordnung der Anschlußeinheit wurden im Zusammenhang der bisherigen Erläuterung der einzelnen Ausführungsbeispiele keine näheren Angaben gemacht.

Die Anschlußeinheit könnte dabei beispielsweise am Gehäusemantel angeordnet sein. Besonders vorteilhaft ist es, wenn die Anschlußeinheit einem ersten der Gehäusedeckel zugeordnet ist.

Bevorzugterweise ist sogar vorgesehen, daß die Anschlußeinheit an dem ersten Gehäusedeckel gehalten ist.

Vorzugsweise ist dabei die Anschlußeinheit als Anschlußplatine ausgebildet, auf welcher Leiterbahnen verlaufen, so daß in geeigneter Weise externe Anschlüsse für den Elektromotor mit den Zuleitungen zu der Wicklung verbunden werden können.

Zweckmäßigerweise ist der Elektromotor so ausgebildet, daß der Stator eine dem ersten Gehäusedeckel zugewandte erste Statoreinheit und eine auf einer dem ersten Gehäusedeckel gegenüberliegenden Seite der ersten Statoreinheit angeordnete zweite Statoreinheit aufweist und daß die in dem Gehäusemantel verlaufende mindestens eine Zuleitung zu der zweiten Statoreinheit führt.

Der Vorteil dieser Lösung ist darin zu sehen, daß damit eine einfache Möglichkeit besteht, eine Zuleitung zu der Statoreinheit zu führen, die nicht im Anschluß an den ersten, die Anschlußeinheit tragenden Gehäusedeckel angeordnet ist, sondern entfernt von dieser liegt.

Insbesondere sieht eine vorteilhafte Ausführungsform des erfindungsgemäßen Elektromotors vor, daß die erste Statoreinheit und die zweite Statoreinheit auf gegenüberliegenden Seiten des Rotors angeordnet sind und somit die Zuleitung von dem ersten Gehäusedeckel über die erste Statoreinheit und den Rotor hinweg zur zweiten Statoreinheit verläuft.

Hinsichtlich der Art und Weise, wie die Zuleitungen in dem Gehäusemantel verlaufen sollen, wurden bislang keine näheren Angaben gemacht. So sieht eine bevorzugte Ausführungsform vor, daß der Gehäusemantel mindestens eine die Zuleitungen aufnehmende Nut aufweist, so daß die im Gehäusemantel verlaufende mindestens eine Zuleitung in dieser Nut liegt.

Vorzugsweise ist dabei vorgesehen, daß die Nut ungefähr in Richtung parallel zur Rotorachse im Gehäusemantel verläuft.

Die Nut könnte dabei auf einer Innenseite, das heißt dem Stator und dem Rotor zugewandten Seite, des Gehäuses angeordnet sein. Besonders vorteilhaft hinsichtlich der Montage ist es, wenn die Nut sich ausgehend von einer Außenfläche des Gehäusemantels in diesen hineinerstreckt.

Eine besonders günstige Lösung sieht vor, daß die Nut im Bereich des mindestens einen Stegs des Gehäusemantels verläuft.

Vorzugsweise liegt dabei die Nut so, daß diese in den Mantelkörper des Gehäusemantels eindringt und daß der jeweilige Steg beiderseits der Nut liegende Bereiche des Mantelkörpers stabil miteinander verbunden hält.

Um eine besonders einfache Montage der in der Nut verlaufenden Zuleitung zu erreichen, ist vorgesehen, daß die Nut den Mantelkörper im wesentlichen durchsetzt, so daß dann, wenn der Steg eine geringere Längserstreckung als der Mantelkörper aufweist, automatisch ein Durchbruch zum Herausführen der Zuleitung aus dem Inneren des Gehäuses vorliegt.

Um ein Lösen der Zuleitung aus der Nut zu vermeiden, ist vorzugsweise vorgesehen, daß die Zuleitung in der Nut fixiert ist.

Zweckmäßigerweise erfolgt dies dadurch, daß die Zuleitung in der Nut durch eine Klebemasse fixiert ist.

Vorzugsweise ist die Klebemasse als Verschlußmasse ausgebildet, welche die Nut verschließt.

Um bei der Montage des erfindungsgemäßen Elektromotors das Verlegen der Zuleitung noch weiter zu erleichtern, ist vorzugsweise vorgesehen, daß sich an die Nut im Gehäusemantel eine Nut in dem ersten Gehäusedeckel anschließt, so daß die Zuleitung sowohl durch den ersten Gehäusedeckel als auch den Gehäusemantel jeweils durch eine Nut geführt werden kann.

Hinsichtlich der Art der Zuleitung, die in der Nut verlaufen soll, wurden bislang keine näheren Angaben gemacht. So wäre es beispielsweise denkbar, in der Nut einen Leitungsdraht zu verlegen, der dann nahe der Statoreinheit mit einem Wicklungsdraht der Motorwicklung, insbesondere einer Statorwicklung, verbunden ist.

Besonders zweckmäßig ist es jedoch, insbesondere um eine zusätzliche Verbindung von Leitungen zu vermeiden, wenn die Zuleitung ein sich von der Motorwicklung, insbesondere der Statorwicklung, fortsetzender Wicklungsdraht ist, so daß keine zusätzliche Verbindung zwischen einer zusätzlichen Leitung und dem Wicklungsdraht der Statorwicklung geschaffen werden muß.

Alternativ oder ergänzend zum Vorsehen einer Nut, durch welche die mindestens eine Zuleitung geführt werden kann, sieht ein anderes Ausführungsbeispiel vor, daß die mindestens eine Zuleitung in das den Gehäusemantel bildende Material eingebettet sind. Diese Lösung hat den Vorteil, daß ein nachträgliches Einlegen einer Zuleitung entfallen kann und somit die Möglichkeit besteht, bereits bei der Herstellung des Gehäusemantels gleichzeitig auch die Zuleitung in diesem vorzusehen.

Hinsichtlich des Einbettens der Zuleitung in den Gehäusemantel sind die unterschiedlichsten Möglichkeiten denkbar. Eine vorteilhafte Lösung sieht vor, daß die mindestens eine Zuleitung in den Gehäusemantel eingegossen ist.

Insbesondere bei Herstellung des Gehäusemantels als Spritzgußteil ist es vorteilhaft, wenn die mindestens eine Zuleitung in den Gehäusemantel miteingespritzt ist.

Sofern der Gehäusemantel mit einem Steg versehen ist, hat es sich als besonders vorteilhaft erwiesen, wenn die mindestens eine Zuleitung in den Steg eingebettet ist und somit im Bereich einer Materialanhäufung liegt, die keinerlei Schwächung der Stabilität des Gehäusemantels nach sich zieht.

Um die Zuleitung in günstiger Weise zu der Anschlußeinheit führen zu können, ist vorzugsweise vorgesehen, daß die Zuleitung einen Durchbruch in einem der Gehäusedeckel durchsetzt und somit in einfacher Weise zu der Anschlußeinheit, insbesondere der Anschlußplatine, geführt werden kann.

Die in den Gehäusemantel eingebettete Zuleitung könnte beispielsweise ein flexibler Draht sein. Um die Zuleitung jedoch beim Herstellen des Gehäusemantels günstig handhaben und einbetten zu können, ist vorgesehen, daß die Zuleitung als ein in sich steifer Leitungsabschnitt ausgebildet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Schnitt längs Linie 1-1 in Fig. 3 durch ein erstes Ausführungsbeispiel eines erfindungsgemäßen Elektromotors;
- Fig. 2: eine vergrößerte perspektivische Darstellung einer Statoreinheit des ersten Ausführungsbeispiels des erfindungsgemäßen Elektromotors;
- Fig. 3: eine Ansicht des ersten Ausführungsbeispiels des erfindungsgemäßen Elektromotors in Richtung des Pfeils A in Fig. 1 und
- Fig. 4: eine perspektivische Darstellung eines Gehäusemantels des ersten Ausführungsbeispiels des erfindungsgemäßen Elektromotors;
- Fig. 5: einen Schnitt ähnlich Fig. 1 durch ein zweites Ausführungsbeispiel eines erfindungsgemäßen Elektromotors und
- Fig. 6: eine perspektivische Darstellung eines halbseitigen Schnitts durch einen Gehäusemantel des zweiten Ausführungsbeispiels des erfindungsgemäßen Elektromotors.

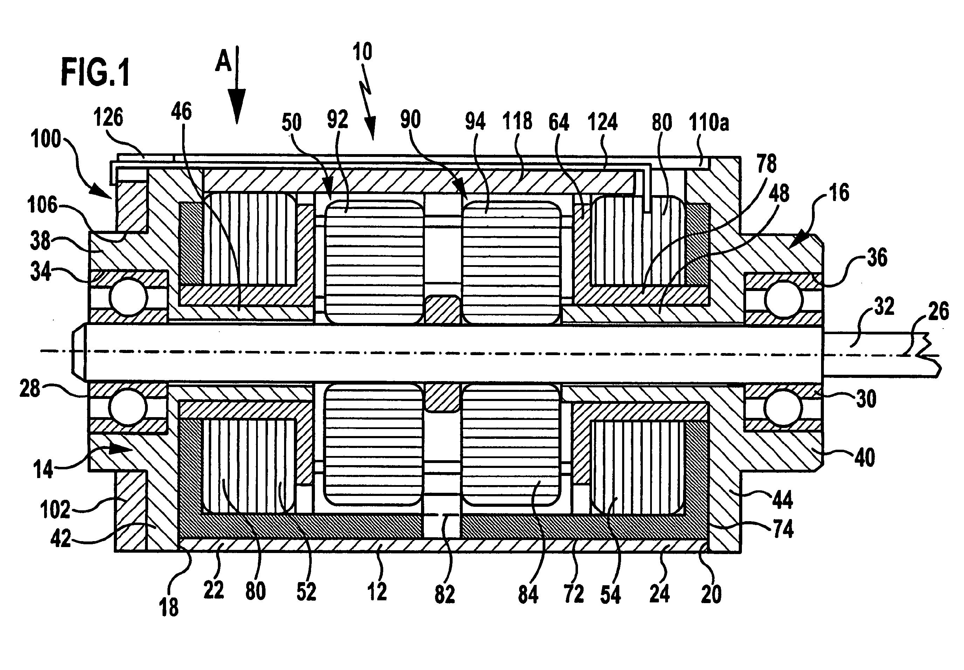

Ein erstes Ausführungsbeispiel eines erfindungsgemäßen bürstenlosen Elektromotors, dargestellt in Fig. 1 bis 4, vorzugsweise eines Schrittmotors, umfaßt ein als Ganzes mit 10 bezeichnetes Gehäuse mit einem Gehäusemantel 12, welcher vorzugsweise als zylindrischer Mantel ausgebildet ist, und den Gehäusemantel 12 auf gegenüberliegenden Seiten verschließende Gehäusedeckel 14 und 16, die mit dem Gehäusemantel 12 verbunden sind. Vorzugsweise ist dabei jeder der Gehäusedeckel 14, 16 mit um den Gehäusedeckel 14, 16 herum verlaufenden Ausnehmungen 18, 20 versehen, in welche der Gehäusemantel mit Endbereichen 22, 24 eingreift, so daß die Gehäusedeckel 14, 16 durch den Gehäusemantel 12 zentriert zu einer Achse 26 gehalten sind.

Die Gehäusedeckel 14 und 16 sind vorzugsweise gleichzeitig auch als Lagerträger für Drehlager 28, 30 ausgebildet, in welchen eine als Ganzes mit 32 bezeichnete Motorwelle koaxial zur Achse 26 drehbar gelagert ist.

Die Drehlager 28, 30 sind dabei in Lageraufnahmen 34, 36 eingesetzt, die durch Halteringe 38, 40 gebildet sind, welche auf einer Trägerplatte 42, 44 des jeweiligen Gehäusedeckels 14, 16 sitzen und vorzugsweise einstückig an diese angeformt sind.

Die als Lagerträger ausgebildeten Gehäusedeckel 14, 16 sind ferner noch mit von den Trägerplatten 42, 44 in ein Inneres des Gehäuses 10 abstehenden Aufnahmehülsen 46, 48 versehen, die zur Lagerung eines als Ganzes mit 50 bezeichneten Stators dienen, der zwei Statoreinheiten 52, 54 umfaßt, wobei die Statoreinheit 52 an dem Gehäusedeckel 14 und die Statoreinheit 54 an dem Gehäusedeckel 16 gehalten und somit von diesem im Gehäuse 10 fixiert ist.

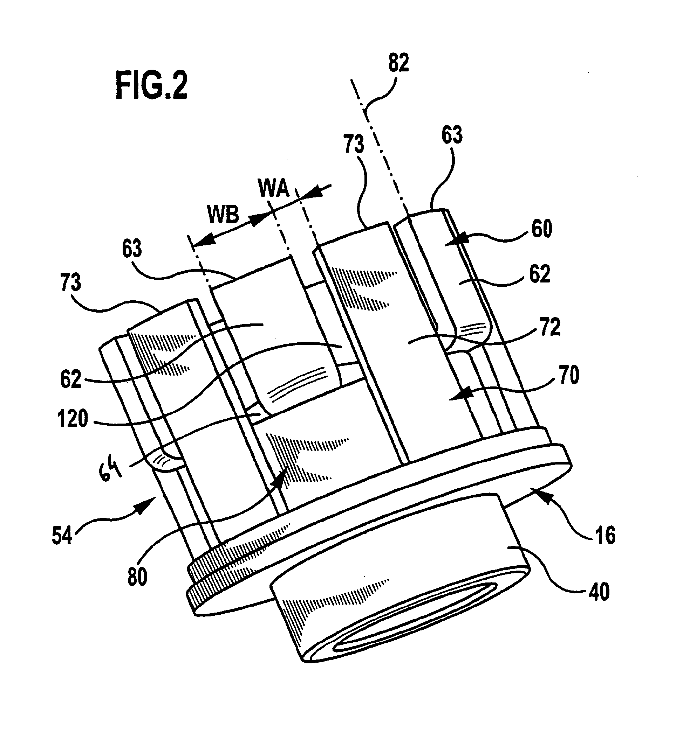

Jede der Statoreinheiten 52, 54 umfaßt dabei, wie insbesondere in Fig. 2 anhand der Statoreinheit 54 dargestellt, ein erstes Polschuhelement 60, das erste, als Klauenpole ausgebildete Polschuhe 62 umfaßt, sowie einen Polschuhträger 64, der sich vorzugsweise in einer Ebene ungefähr senkrecht zur Achse 26 erstreckt.

Darüber hinaus umfaßt jede Statoreinheit 52, 54 ein zweites Polschuhelement 70, welches zweite, als Klauenpole ausgebildete Polschuhe 72 umfaßt, die ebenfalls von einem Polschuhträger 74, der sich ungefähr senkrecht zur Achse 26 erstreckt, gehalten sind.

Die beiden Polschuhträger 64 und 74 erstrecken sich dabei ungefähr parallel zueinander und werden durch ein Verbindungselement 78 im Abstand voneinander gehalten, welches auf der Aufnahmehülse, in diesem Fall der Aufnahmehülse 48 des Gehäusedeckels 14, sitzt und von dieser gehalten ist.

Das Verbindungselement 78 stellt dabei einen magnetischen Schluß zwischen dem ersten Polschuhelement 60 und dem zweiten Polschuhelement 70 her.

Darüber hinaus sitzt auf dem Verbindungselement 78 eine eine Statorwicklung darstellende Ringspule 80, welche zwischen den Polschuhträgern 64 und 74 angeordnet ist und außerdem innerhalb der zweiten Polschuhe 72 liegt, die sich über die Ringspule 80 hinwegerstrecken.

Vorzugsweise liegen die ersten Polschuhe 62 und die zweiten Polschuhe 72 auf einer gemeinsamen zylindrischen konzentrisch zur Achse 26 angeordneten Hüllfäche 82 und weisen dabei in Azimutalrichtung zur Achse 26 eine sich über einen Winkelabstand WB erstreckende Breite auf, die für alle Polschuhe 62, 72 identisch ist.

Ferner sitzt jeder der zweiten Polschuhe 72 zwischen zwei aufeinanderfolgenden ersten Polschuhen 62, so daß die ersten Polschuhe 62 und die zweiten Polschuhe 72 relativ zueinander auf Lücke angeordnet sind.

Dies führt dazu, daß zwischen den jeweiligen aufeinanderfolgenden Polschuhen 62, 72 ein Winkelabstand WA besteht, welcher zwischen allen Polschuhen 62, 72 identisch ist.

Die ersten und zweiten Polschuhe 62, 72 übergreifen somit einen von diesen umschlossenen Raum 84 zur Aufnahme eines um die Achse 26 als Rotorachse drehbaren Rotors 90.

Ferner sind die Statoreinheiten 52 und 54 identisch ausgebildet und spiegelsymmetrisch zueinander im Gehäuse 10 angeordnet, so daß jeweils Enden 63, 73 der Polschuhe einander zugewandt sind und somit auch die Räume 84 in Richtung der Achse 26 im wesentlichen unmittelbar aufeinanderfolgen.

In den Räumen 84 der Statoreinheiten 52, 54 ist der Rotor 90 angeordnet, welcher Rotoreinheiten 92, 94 umfaßt, wobei die Rotoreinheit 92 der Statoreinheit 52 und die Rotoreinheit 94 der Statoreinheit 54 zugeordnet ist, beide Rotoreinheiten 92, 94 fest auf der Motorwelle 32 sitzen und jede der Rotoreinheiten 92, 94 magnetisierte Bereiche aufweist, die mit den Polschuhen 62, 72 in Wechselwirkung treten.

Zur Versorgung der beiden Ringspulen 80 der Statoreinheiten 52, 54 mit Strom ist einer der Gehäusedeckel 14, 16, im dargestellten Fall der erste Gehäusedeckel 14, mit einer elektrischen Anschlußeinheit 100 versehen, welche vorzugsweise eine Anschlußplatine 102 umfaßt, die Leiterbahnen 104 trägt und eine Ausnehmung 106 aufweist, welche den Haltering 38 umgreift, so daß die Anschlußplatine 102 um den Haltering 38 herum verläuft, auf der Trägerplatte 42 aufliegt und vorzugsweise mit dieser, beispielsweise durch Kleben, verbunden ist.

Durch die Verbindung der Anschlußplatine 102 mit dem Gehäusedeckel 14 ist die am Gehäusedeckel 14 gehaltene Ringspule 80 in einfacher Weise durch durch den Gehäusedeckel 14 hindurch führende Leitungen über die Anschlußplatine 102 mit Strom versorgbar.

Hierzu sind beispielsweise auf der Anschlußplatine 102 Spulenanschlüsse 108a, b vorgesehen, zu denen beispielsweise ein Wicklungsdraht der auf dem Gehäusedeckel 14 sitzenden Ringspule 80 herausgeführt ist.

Dagegen ist die Versorgung der Spule 80, welche an dem dem ersten Gehäusedeckel 14 gegenüberliegenden zweiten Gehäusedeckel 16 gehalten ist, insoweit problematisch, als die Versorgung außen um den Rotor 90 herumgeführt werden muß.

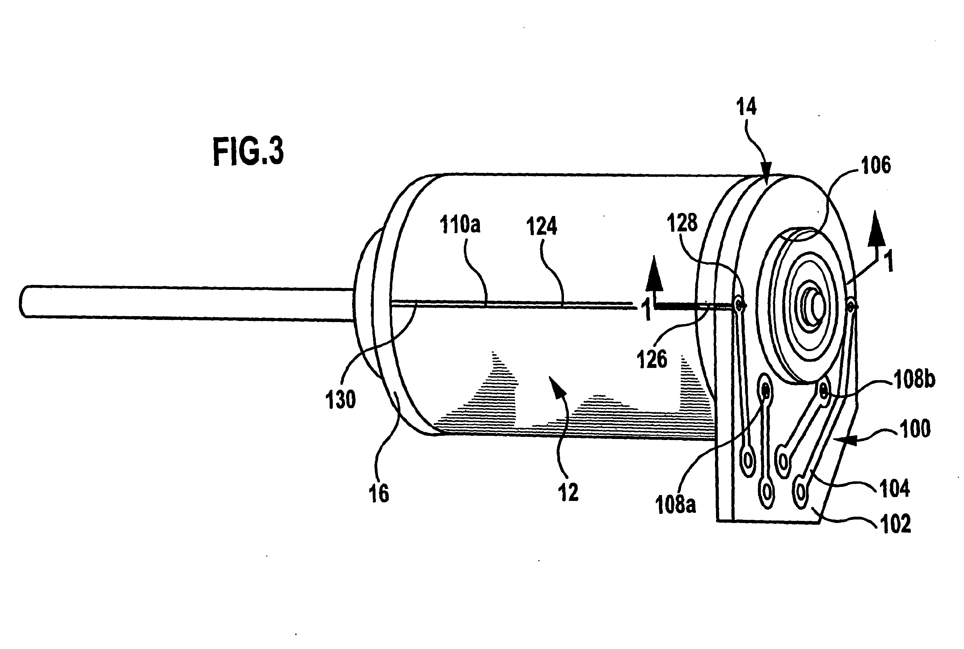

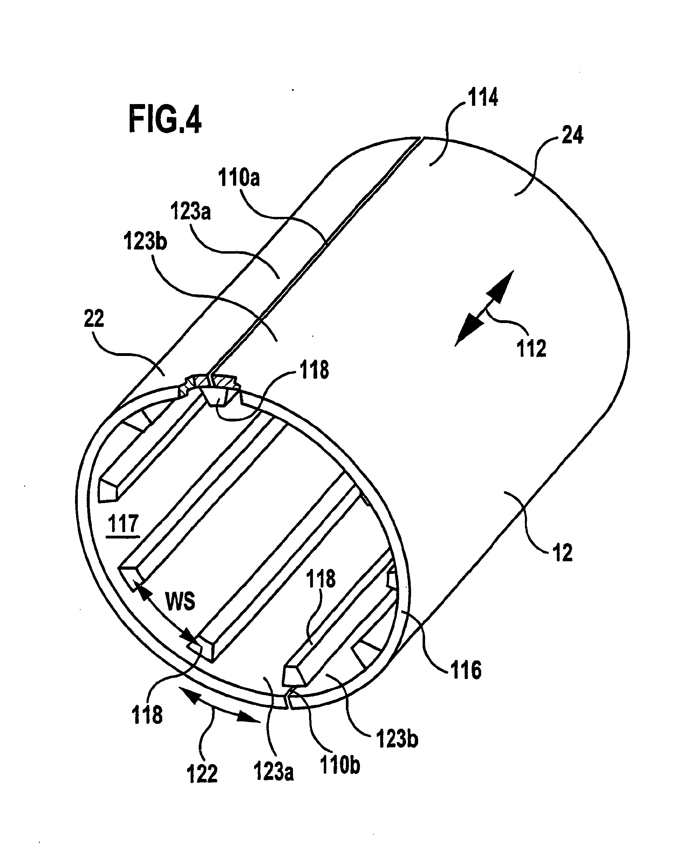

Hierzu ist, wie in Fig. 3 und Fig. 4 dargestellt, der Gehäusemantel 12 mit Nuten 110, beispielsweise Längsnuten 110a, b, versehen, die sich in einer Längsrichtung 112, die vorzugsweise ungefähr parallel zur Achse 26 verläuft, von dem einen Endbereich 22 zum anderen Endbereich 24 des Gehäusemantels 12 erstrecken und von einer Außenfläche 114 ausgehend in den Gehäusemantel 12 eindringen.

Vorzugsweise ist der Gehäusemantel 12 aus Kunststoff ausgebildet und weist einen Mantelkörper 116 auf, welcher durch eine beispielsweise kreiszylindrisch um die Achse 26 herum verlaufende Wand gebildet ist, so daß die Nuten 110 in den Mantelkörper 116 von der Außenfläche 114 her eindringen.

Ferner umfaßt der Gehäusemantel 12 auf einer Innenseite 117 des Mantelkörpers 116 angeordnete Stege 118, welche ebenfalls ungefähr parallel zur Längsrichtung 112 verlaufen und bezüglich der Achse 26 in konstanten Winkelabständen WS voneinander angeordnet sind.

Die Stege 118 liegen bei zusammengebautem Elektromotor in Zwischenräumen 120 zwischen aufeinanderfolgenden Polschuhen 62, 72, die dadurch entstehen, daß zwischen den aufeinanderfolgenden Polschuhen 62, 72 ein Freiraum mit dem Winkelabstand WA besteht.

Dadurch sind die Polschuhe 62, 72 der beiden Statoreinheiten 52, 54 zwangsläufig koaxial und miteinander fluchtend in dem Gehäusemantel 12 angeordnet und in dieser Position durch die Stege 118 im Gehäuse 10 fixiert.

Die Stege 118 dienen gleichzeitig zur Verstärkung des Gehäusemantels 12 im Bereich der Längsnuten 110a, b dadurch, daß die Längsnuten 110a, b in azimutaler Richtung 122 eine geringere Breite aufweisen als die Stege 118 und außerdem die Längsnuten 110a, b mittig über den jeweiligen Stegen 118 verlaufen, so daß die Stege 118 selbst dann, wenn die Längsnuten 110a, b den Mantelkörper 116 vollständig in radialer Richtung zur Achse 26 durchdringen, die Längsnuten 110a, b überbrücken und beiderseits der Längsnuten 110a, b liegende Bereiche 123a, b des Mantelkörpers 116 verbinden und somit die Steifigkeit des Gehäusemantels 112 insgesamt sicherstellen.

Ferner durchdringen die Längsnuten 110a, b den Gehäusemantel 12 zumindest in den Endbereichen 22 und 24, so daß, wie in Fig. 1 und 4 dargestellt, im Endbereich 24 ein Wicklungsdraht 124 der Ringspule 80 aus dem Inneren des Gehäuses 10 über die Nut 110, beispielsweise die Längsnut 110a, herausgeführt werden kann und in der Nut 110 und in einer sich an diese anschließende Nut 126 im Gehäusedeckel 14 zu einem Anschluß 128 auf der Anschlußplatine 102 geführt werden kann, wobei dabei der Wicklungsdraht 124 von außen in die Nuten 110 und 126 des Gehäusemantels 12 und des Gehäusedeckels 14 eingelegt werden kann.

Vorzugsweise wird dabei der Wicklungsdraht 124 durch eine Verschlußmasse 130, mit welcher die Nut 110 aufgefüllt wird, fixiert und gleichzeitig durch die Verschlußmasse 130 die Nut 110 über ihre ganze Länge verschlossen so daß somit auch das Gehäuse 10 im Bereich des Gehäusemantels 12 gegen von außen eindringende Medien verschlossen ist.

Mit dieser Lösung läßt sich in besonders einfacher Weise die elektrische Zuleitung 124 von der in der am zweiten Gehäusedeckel 16 gehaltenen Statoreinheit 54 angeordneten Ringspule 80 zur Anschlußeinheit 100 führen, die an einer Seite des Gehäuses 10 angeordnet ist, die der Seite, welche die Anschlußeinheit 100 trägt, gegenüberliegt.

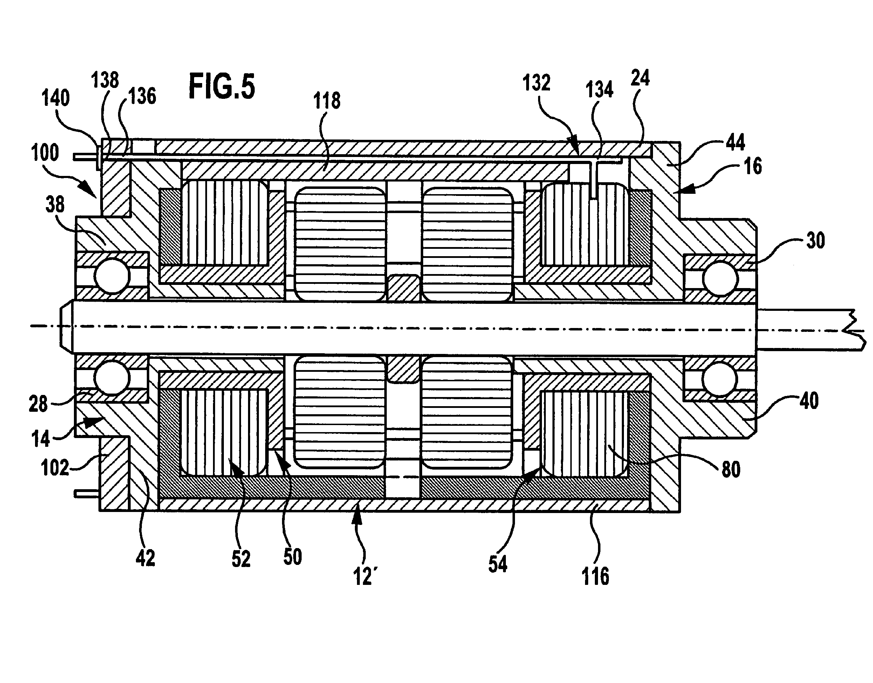

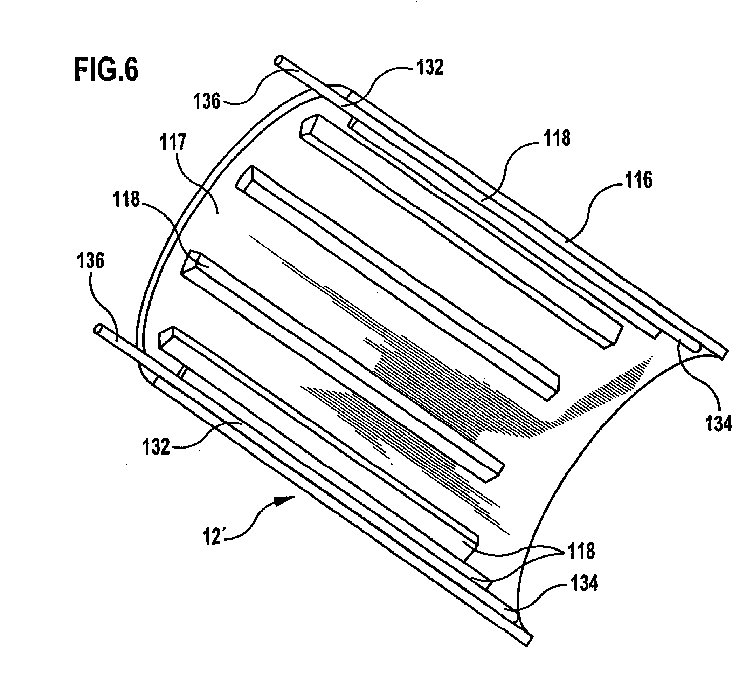

Bei einem zweiten Ausführungsbeispiel eines erfindungsgemäßen Elektromotors, dargestellt in Fig. 5 und 6 sind diejenigen Elemente, die mit denen des ersten Ausführungsbeispiels identisch sind, mit denselben Bezugszeichen versehen, so daß hinsichtlich der Erläuterung derselben vollinhaltlich auf die Ausführungen zum ersten Ausführungsbeispiel Bezug genommen werden kann.

Im Gegensatz zum ersten Ausführungsbeispiel ist bei dem zweiten Ausführungsbeispiel im Mantelkörper 116 des Gehäusemantels 12' keine Nut vorgesehen, sondern es sind in den Gehäusemantel 12' im Bereich der Stege 118 Zuleitungen 132 eingebettet, welche von der Spule 80 der Statoreinheit 54, die an dem zweiten Gehäusedeckel 16 gehalten ist, und somit von dem Endbereich 24 bis zu der Anschlußplatine 102 führen, so daß eine Verbindung mit den entsprechenden Leiterbahnen der Anschlußplatine 102 möglich ist.

Die Zuleitungen 132 sind dabei insbesondere in dem Bereich eines der Stege 118 eingebettet und durchsetzen den jeweiligen Steg 118 im wesentlichen mittig, so daß die Zuleitung 132 vorzugsweise im Bereich einer Innenseite des Mantelkörpers 116 verläuft.

Damit ist im Bereich der Spule 80 der Statoreinheit 54 ein Anschluß des Wicklungsdrahts der Ringspule 80 an die Zuleitung 132 möglich, beispielsweise durch ein Verlöten eines Endes 134 der Zuleitung 132 mit einem Wicklungsdraht der Spule 80. ,

Ein anderes Ende 136 der Zuleitung 132 steht über den Gehäusemantel 12 am Endbereich 22 über und ist durch einen Durchbruch 138 im Gehäusedeckel 14 hindurchsteckbar, um einen Anschluß 140 der Anschlußplatine 102 zu erreichen.

Eine besonders vorteilhafte Ausbildung der Zuleitung 132 sieht vor, daß diese als Stab oder Steg ausgebildet ist und somit beim Spritzen des Gehäusemantels 12 aus Kunststoff in die Spritzgußform einlegbar und somit beim Spritzen des Gehäusemantels 12 miteinspritzbar ist.

## Patentansprüche

1. Elektromotor mit einem Gehäuse (10), umfassend einen Gehäusemantel (12) und endseitig desselben angeordnete Gehäusedeckel (14, 16), mit einem im Gehäuse (10) um eine Rotorachse (26) drehbar gelagerten Rotor (90), mit einem in dem Gehäuse (10) angeordneten Stator (50) mit mindestens einer Motorwicklung (80), mit einer am Gehäuse (10) angeordneten elektrischen Anschlusseinheit (100), und mit mindestens einer von der elektrischen Anschlusseinheit (100) zur Motorwicklung (80) in dem Gehäusemantel (12) verlaufenden Zuleitung (124, 132), **dadurch gekennzeichnet, dass** der Gehäusemantel (12) einen Mantelkörper (116) und mindestens einen Steg (118) aufweist, dass die mindestens eine Zuleitung (124, 132) im Bereich dieses Stegs (118) im Gehäusemantel (12) verläuft, und dass der mindestens eine Steg (118) beiderseits der Zuleitung (124, 132) liegende Bereiche (123 a, b) des Mantelkörpers (116) miteinander verbindet und relativ zueinander stabilisiert.

2. Elektromotor nach Anspruch 1, **dadurch gekennzeichnet, dass** der Gehäusemantel (12) aus einem isolierenden Material hergestellt ist.

3. Elektromotor nach Anspruch 1 oder 2, **dadurch gekennzeichnet, dass** der Gehäusemantel (12) aus Kunststoff hergestellt ist.

4. Elektromotor nach Anspruch 3, **dadurch gekennzeichnet, dass** der Gehäusemantel (12) ein Kunststoffspritzgussteil ist.

5. Elektromotor nach einem der voranstehenden Ansprüche, **dadurch gekennzeichnet, dass** der mindestens eine Steg (118) sich in Richtung (112) parallel zur Rotorachse (26) erstreckt.

6. Elektromotor nach einem der voranstehenden Ansprüche, **dadurch gekennzeichnet, dass** der mindestens eine Steg (118) auf einer Innenseite (117) des Mantelkörpers (116) angeordnet ist.

7. Elektromotor nach einem der voranstehenden Ansprüche, **dadurch gekennzeichnet, dass** die Anschlusseinheit (100) einem ersten der Gehäusedeckel (14) zugeordnet ist.

8. Elektromotor nach Anspruch 7, **dadurch gekennzeichnet, dass** die Anschlusseinheit (100) an dem ersten Gehäusedeckel (14) gehalten ist.

9. Elektromotor nach einem der voranstehenden Ansprüche, **dadurch gekennzeichnet, dass** die Anschlusseinheit (100) eine Anschlussplatine (102) umfasst.

10. Elektromotor nach einem der voranstehenden Ansprüche, **dadurch gekennzeichnet, dass** der Stator (50) eine dem ersten Gehäusedeckel (14) zugewandt angeordnete erste Statoreinheit (52) und eine auf einer dem ersten Gehäusedeckel (14) gegenüberliegenden Seite der ersten Statoreinheit (52) angeordnete zweite Statoreinheit (54) aufweist und dass die im Gehäusemantel (12) verlaufende Zuleitung (124, 132) zu der zweiten Statoreinheit (54) führt.

11. Elektromotor nach einem der voranstehenden Ansprüche, **dadurch gekennzeichnet, dass** der Gehäusemantel (12) mindestens eine sich ausgehend von einer Außenfläche (114) des Gehäusemantels (12) radial einwärts in diesen hinein erstreckende und die Zuleitung (124) aufnehmende Nut (110) aufweist.

12. Elektromotor nach Anspruch 11, **dadurch gekennzeichnet, dass** die Nut (110) ungefähr in einer Richtung (112) parallel zur Rotorachse (26) im Gehäusemantel (12) verläuft.

13. Elektromotor nach einem der Ansprüche 11 oder 12, **dadurch gekennzeichnet, dass** die Nut (110) im Bereich des mindestens einen Stegs (118) des Gehäusemantels (12) verläuft.

14. Elektromotor nach Anspruch 13, **dadurch gekennzeichnet, dass** die Nut (110) in den Mantelkörper (116) des Gehäusemantels (12) eindringt und dass der jeweilige Steg (118) beiderseits der Nut (110) liegende Bereiche des Mantelkörpers (116) unter Sicherstellung der Steifigkeit des Mantelkörpers (116) miteinander verbunden hält.

15. Elektromotor nach Anspruch 13 oder 14, **dadurch gekennzeichnet, dass** die Nut (110) den Mantelkörper (116) im wesentlichen durchsetzt.

16. Elektromotor nach einem der Ansprüche 11 bis 15, **dadurch gekennzeichnet, dass** die Zuleitung (124) in der Nut (110) fixiert ist.

17. Elektromotor nach Anspruch 16, **dadurch gekennzeichnet, dass** die Zuleitung (124) in der Nut (110) durch eine Klebemasse (130) fixiert ist.

18. Elektromotor nach einem der Ansprüche 11 bis 17, **dadurch gekennzeichnet, dass** die Nut (110) durch eine Verschlussmasse (130) verschlossen ist.

19. Elektromotor nach einem der Ansprüche 11 bis 18, **dadurch gekennzeichnet, dass** sich fluchtend an die Nut (110) im Gehäusemantel (12) eine Nut (126) in dem ersten der Gehäusedeckel (14) anschließt.

20. Elektromotor nach einem der Ansprüche 11 bis 19, **dadurch gekennzeichnet, dass** die mindestens eine Zuleitung (124) ein sich von der Motorwicklung (80) fortsetzender Wicklungsdraht ist.

21. Elektromotor nach einem der voranstehenden Ansprüche, **dadurch gekennzeichnet, dass** die mindestens eine Zuleitung (132) in das den Gehäusemantel (12) bildende Material eingebettet sind.

22. Elektromotor nach Anspruch 21, **dadurch gekennzeichnet, dass** die mindestens eine Zuleitung (132) in den Gehäusemantel (12) eingegossen ist.

23. Elektromotor nach Anspruch 21 oder 22, **dadurch gekennzeichnet, dass** die mindestens eine Zuleitung (132) in dem mindestens einen Steg (118) eingebettet ist.

24. Elektromotor nach einem der Ansprüche 21 bis 23, **dadurch gekennzeichnet, dass** die Zuleitung (132) durch einen Durchbruch (138) in einem der Gehäusedeckel (14) durchgesteckt ist.

25. Elektromotor nach einem der Ansprüche 21 bis 24, **dadurch gekennzeichnet, dass** die Zuleitung (132) als in sich steifer Leitungsabschnitt ausgebildet ist.

## Claims

1. An electric motor comprising a housing (10), said housing including a housing sleeve (12) and housing covers (14, 16) disposed at the ends of the housing sleeve, comprising a rotor (90), mounted rotatably about a rotor axis (26) in the housing (10), the motor comprising a stator (50) disposed in the housing (10) with at least one motor winding (80), the motor comprising an electrical connection unit (100) disposed on the housing (10), and the motor comprising at least one feed line (124, 132) running in the housing sleeve (12) from the electrical connection unit (100) to the motor winding (80), **characterized in that** the housing sleeve (12) has a sleeve body (116) and at least one rib (118), that the at least one feed line (124, 132) runs in the region of this rib (118) in the housing sleeve (12), and that the at least one rib (118) connects the regions (123 a, b) of the sleeve body (116) lying on either side of the feed line (124, 132) with one another and stabilizes them in relation to each other.

2. An electric motor according to Claim 1, **characterized in that** the housing sleeve (12) is made of an insulating material.

3. An electric motor according to Claim 1 or 2, **characterized in that** the housing sleeve (12) is made of plastics.

4. An electric motor according to Claim 3, **characterized in that** the housing sleeve (12) is a plastics injection moulded part.

5. An electric motor according to any of the preceding claims, **characterized in that** the at least one rib (118) extends in a direction (112) parallel to the rotor axis (26).

6. An electric motor according to any of the preceding claims, **characterized in that** the at least one rib (118) is disposed on an inner side (117) of the sleeve body (116).

7. An electric motor according to any of the preceding claims, **characterized in that** the connection unit (100) is associated with a first of the housing covers (14).

8. An electric motor according to Claim 7, **characterized in that** the connection unit (100) is mounted on the first housing cover (14).

9. An electric motor according to any of the preceding claims, **characterized in that** the connection unit (100) includes a connection board (102).

10. An electric motor according to any of the preceding claims, **characterized in that** the stator (50) has a first stator unit (52) arranged facing the first housing cover (14) and a second stator unit (54) disposed on a side of the first stator unit (52) lying opposite the first housing cover (14) and that the feed line (124, 132) running in the housing sleeve (12) leads to the second stator unit (54).

11. An electric motor according to any of the preceding claims, **characterized in that** the housing sleeve (12) has at least one groove (110) starting from an outer surface (114) of the housing sleeve (12), extending radially inwards into the housing sleeve, and accommodating the feed line (124).

12. An electric motor according to Claim 11, **characterized in that** the groove (110) runs in the housing sleeve (12) approximately in a direction (112) parallel to the rotor axis (26).

13. An electric motor according to either of Claims 11 and 12, **characterized in that** the groove (110) runs in the region of the at least one rib (118) of the housing sleeve (12).

14. An electric motor according to Claim 13, **characterized in that** the groove (110) penetrates into the sleeve body (116) of the housing sleeve (12) and that the respective rib (118) holds the regions of the sleeve body (116) lying on either side of the groove (110) connected to one another, while ensuring the stiffness of the sleeve body (116).

15. An electric motor according to Claim 13 or 14, **characterized in that** the groove (110) substantially penetrates through the sleeve body (116).

16. An electric motor according to any of Claims 11 to 15, **characterized in that** the feed line (124) is fixed in the groove (110).

17. An electric motor according to Claim 16, **characterized in that** the feed line (124) is fixed in the groove (110) by means of a bonding compound (130).

18. An electric motor according to any of Claims 11 to 17, **characterized in that** the groove (110) is sealed by means of a sealing compound (130).

19. An electric motor according to any of Claims 11 to 18, **characterized in that** a groove (126) in the first (14) of the housing covers adjoins the groove (110) in the housing sleeve (12) in exact alignment therewith.

20. An electric motor according to any of Claims 11 to 19, **characterized in that** the at least one feed line (124) is a winding wire which continues from the motor winding (80).

21. An electric motor according to any of the preceding claims, **characterized in that** the at least one feed line (132) is embedded into the material forming the housing sleeve (12).

22. An electric motor according to Claim 21, **characterized in that** the at least one feed line (132) is moulded into the housing sleeve (12).

23. An electric motor according to Claim 21 or 22, **characterized in that** the at least one feed line (132) is embedded in the at least one rib (118).

24. An electric motor according to any of Claims 21 to 23, **characterized in that** the feed line (132) is passed through via an opening (138) in one of the housing covers (14).

25. An electric motor according to any of Claims 21 to 24, **characterized in that** the feed line (132) is formed as an intrinsically stiff line portion.

## Revendications

1. Moteur électrique avec une carcasse (10), comprenant une enveloppe de carcasse (12) et disposé aux extrémités de celle-ci, des flasques de carcasse (14, 16), avec un rotor (90) disposé dans la carcasse de manière rotative autour d'un axe de rotor (26), avec un stator (50) logé dans la carcasse (10), avec au moins un enroulement moteur (80), avec une unité de raccordement (100) électrique disposée sur la carcasse (10), et avec au moins un câble d'alimentation (124, 132) s'étendant dans l'enveloppe de la carcasse (12) de l'unité de raccordement électrique (100) à l'enroulement moteur (80),
**caractérisé en ce que** l'enveloppe de la carcasse (12) présente un corps d'enveloppe (116) et au moins une barre (118), **en ce que** l'un des câbles d'alimentation (124, 132) au moins s'étend dans l'enveloppe de la carcasse (12), dans la zone de cette barre (118) et **en ce que** l'une des barres (118) au moins relie ensemble et les stabilise l'une par rapport à l'autre, les zones (123 a, b) du corps d'enveloppe (116), situées des deux côtés du câble d'alimentation (124, 132).

2. Moteur électrique selon la revendication 1,
**caractérisé en ce que** l'enveloppe de la carcasse (12) est fabriquée dans un matériau isolant.

3. Moteur électrique selon l'une quelconque des revendications 1 ou 2, **caractérisé en ce que** l'enveloppe de la carcasse (12) est fabriqué en plastique.

4. Moteur électrique selon la revendication 3,
**caractérisé en ce que** l'enveloppe de la carcasse (12) est une pièce en plastique moulée par injection.

5. Moteur électrique selon l'une quelconque des revendications précédentes, **caractérisé en ce que** l'une des barres (118) au moins s'étend dans une direction (112) parallèle à l'axe du rotor (26) .

6. Moteur électrique selon l'une quelconque des revendications précédentes, **caractérisé en ce que** l'une des barres (118) au moins est disposée sur une face interne (117) du corps de l'enveloppe (116).

7. Moteur électrique selon l'une quelconque des revendications précédentes, **caractérisé en ce que** l'unité de raccordement (100) est asservie à un premier des flasques de carcasse (14).

8. Moteur électrique selon la revendication 7,
**caractérisé en ce que** l'unité de raccordement (100) est fixée sur le premier flasque de carcasse (14).

9. Moteur électrique selon l'une quelconque des revendications précédentes, **caractérisé en ce que** l'unité de raccordement (100) comporte une platine de raccordement (102).

10. Moteur électrique selon l'une quelconque des revendications précédentes, **caractérisé en ce que** le stator (50) présente une première unité de stator (52), orientée vers le premier flasque de carcasse (14) et une deuxième unité de stator (54) disposée sur le côté opposé du premier flasque de carcasse (14) de la première unité de stator (52) et **en ce que** le câble d'alimentation (124, 132) s'étendant dans l'enveloppe de la carcasse (12) conduit à la deuxième unité de stator (54).

11. Moteur électrique selon l'une quelconque des revendications précédentes, **caractérisé en ce que** l'enveloppe de la carcasse (12) présente au moins une rainure (110) partant d'une face externe (114) de l'enveloppe de la carcasse (12) et s'enfonçant dans un sens, radialement dans celle-ci, et logeant le câble d'alimentation (124).

12. Moteur électrique selon la revendication 11,
**caractérisé en ce que** la rainure (110) suit à peu près une direction (112) parallèle à l'axe du rotor (26) dans l'enveloppe de la carcasse (12) .

13. Moteur électrique selon l'une quelconque des revendications 11 ou 12, **caractérisé en ce que** la rainure (110) s'étend dans la zone de l'une des barres (118) au moins de l'enveloppe de la carcasse (12).

14. Moteur électrique selon la revendication 13,
**caractérisé en ce que** la rainure (110) s'engage dans le corps (116) de l'enveloppe de la carcasse (12) et **en ce que** la barre (118) respective maintient reliées ensemble les deux zones du corps de l'enveloppe (116) situées des deux côtés de la rainure (110), en assurant la rigidité du corps de l'enveloppe (116).

15. Moteur électrique selon l'une quelconque des revendications 13 ou 14, **caractérisé en ce que** la rainure (110) traverse sensiblement le corps de l'enveloppe (116).

16. Moteur électrique selon l'une quelconque des revendications 11 à 15, **caractérisé en ce que** le câble d'alimentation (124) est fixé dans la rainure (110).

17. Moteur électrique selon la revendication 16, **caractérisé en ce que** le câble d'alimentation (124) est fixé dans la rainure (110) à l'aide d'une masse adhésive (130).

18. Moteur électrique selon l'une quelconque des revendications 11 à 17, **caractérisé en ce que** la rainure (110) est obturée par une masse de scellement (130).

19. Moteur électrique selon l'une quelconque des revendications 11 à 18 **caractérisé en ce qu'**une rainure (126), alignée sur la rainure (110) dans l'enveloppe de la carcasse (12), se raccorde au premier des flasques de la carcasse (14).

20. Moteur électrique selon l'une quelconque des revendications 11 à 19, **caractérisé en ce que** l'un des câbles d'alimentation (124) au moins est un fil d'enroulement dans le prolongement de l'enroulement moteur (80).

21. Moteur électrique selon l'une quelconque des revendications précédentes, **caractérisé en ce que** l'un des câbles d'alimentation (132) au moins est logé dans le matériau formant l'enveloppe de la carcasse (12).

22. Moteur électrique selon la revendication 21,
**caractérisé en ce que** l'un des câbles d'alimentation (132) au moins est scellé dans l'enveloppe de la carcasse (12).

23. Moteur électrique selon l'une quelconque des revendications 21 ou 22, **caractérisé en ce que** l'un des câbles d'alimentation (132) au moins est logé dans l'une des barres (118) au moins.

24. Moteur électrique selon l'une quelconque des revendications 21 à 23, **caractérisé en ce que** le câble d'alimentation (132) est inséré à travers un passage (138) dans le flasque de la carcasse (14).

25. Moteur électrique selon l'une quelconque des revendications 21 à 24, **caractérisé en ce que** le câble d'alimentation (132) est réalisé sous forme de segment de câble rigide en soi.
